# EUROPEAN PATENT APPLICATION

(11) **EP 0 896 173 A2**
(43) Date of publication of application: **10.02.1999**
(21) Application number: 98111390.5
(22) Date of filing: 20.06.1998
(51) Int. Cl.: F16J 3/02, F16L 21/02

(54) **A sealing device**

(30) Priority: 05.08.1997 SE 9702864
(71) Applicant: Forsheda AB, S-330 12 Forsheda (SE)
(72) Inventor: Jörnhagen, Lennart, 331 31 Värnamo (SE)
(74) Representative: Linde, Leif

(57) **Abstract**

A sealing device for sealing a joint between two pipe end portions comprises a space (60) constituted by two sealing surfaces positioned on two pipe end portions as well as a sealing element (62) consisting of elastic material and compressed in the space between the sealing surfaces. The sealing element (62) is introducable into the space (60) while a sliding action takes place between one or several sliding surfaces on the sealing element on one hand and one sealing surface (58) or the sealing surfaces on the other hand to the position compressed in the space between the sealing surfaces. In order to facilitate the sliding the sliding surface of the sliding surfaces of the sealing element and/or the sealing surface or the sealing surfaces adapted to cooperate with the sliding surface or the sliding surfaces are at least partially provided with fibre flock (72) applied to said surfaces.

## Description

The present invention relates to a sealing device for sealing a joint between two elements, for example two pipe end portions.

A previously known sealing device of this kind comprises a space positioned between the elements and defined by two sealing surfaces facing each other and positioned on the two elements and a sealing element consisting of elastic material and compressed in the space between the sealing surfaces. The sealing element is introducable into the space while a sliding action takes place between one or more sliding surfaces arranged on the sealing element on one hand and the sealing surface or the sealing surfaces of the sealing surfaces on the other hand to the position in which the sealing element is compressed in the space between the sealing surfaces. Especially when the elements and thereby the sealing surfaces thereof consist of a relatively coarse material, for example concrete, it is necessary to take special measures for making it possible for the sealing surfaces and the sliding surfaces of the sealing elements to slide against each other without any problems. Thus, when jointing concrete socket pipes it is usual initially to position a sealing ring on the spigot end of one of the concrete pipes, to a apply a lubricant on the surface of the sealing ring, which shall slide against the sealing surface of the socket and/or the sealing surface of the socket and finally to provide the sealed joint between the pipe end portions by introducing the spigot end into the socket while the sealing ring positioned on the spigot end slides against the sealing surface of the socket, the sealing ring being thereby compressed between the sealing surfaces of the socket and the spigot end. When jointing concrete socket pipes it is previously known also to mould the sealing ring into the socket at the sealing surface thereof and thereupon to provide the pipe jointing in principally the same way as described above. Also in this case it is necessary to apply a lubricant onto the sliding surface of the sealing ring and/or the sealing surface which shall cooperate with the sliding surface of the sealing ring.

The application of a lubricant to the sealing ring and/or the sealing surface which shall at the pipe jointing slide against the sealing ring is a measure which makes the pipe jointing substantially more complicated. This is especially caused by the fact that the application of the lubricant must usually take place short before the jointing of the socket and the spigot end. In order to avoid the requirement with regard to application of a lubricant in connection with the pipe jointing it is as described in for example the Swedish Patent Specification No. 7800282-1 previously known to use at the pipe jointing a sealing ring provided with a sliding skin. When using a sealing ring of this kind the sliding does not take place between the sealing ring and the sealing surface of the socket or the spigot end but inside the sealing ring between the sliding skin of the sealing ring and the main body of the sealing ring, the sliding skin being without sliding carried along by the sealing surface engaging the sliding skin. In a sealing ring of this kind the lubricant is applied in a pocket positioned between the sliding skin of the sealing ring and the main body thereof which makes it possible to apply the lubricant in connection with the manufacturing of the sealing ring, and this provides that it is not necessary to apply a lubricant in connection with the pipe jointing. A drawback of sealing rings of this kind is that they are complicated to manufacture and therefore relatively expensive. A further drawback is that it is in connection with the pipe jointing often necessary to adjust the position of the sliding skin before the pipe jointing is started.

The object of the invention is to provide a sealing device which lacks the above drawbacks.

In order to comply with this object the sealing device according to the invention is characterized in that the sliding surface or the sliding surfaces of the sealing element and/or the sealing surface or the sealing surfaces intended to cooperate with said sliding surface or said sliding surfaces are at least partially provided with fibre flock applied to said surfaces. Thus, it has to great surprise shown that fibre flock applied to the sliding surfaces and/or the sealing surfaces in an excellent way acts as a lubricant and makes it unnecessary to apply a lubricant in connection with the pipe jointing or to provide the sealing element with a sliding skin.

Suitably, the fibre flock consists of textile fibres, for example synthetic fibres of polyamide, having a length of between 0,5 and 5 mm and preferably comprising 50 - 300 fibres per square millimetre. The fibre flock is suitably connected with the surfaces by means of an adhesive, for example a resin adhesive of the two-component type.

In the case that the sealing element is moulded into the element forming one of the sealing surfaces, it can be suitable to provide also the surface of the sealing element which is moulded into the element provided with said sealing surface with fibre flock applied thereto, in order to improve the binding between the sealing element and the element into which the sealing element is moulded. Thereby, it is possible to refrain from providing the sealing element with different types of projecting retainer portions which have the drawback of reducing the strength of the element into which the sealing element is moulded.

Some different embodiments of the sealing device according to the invention shall in the following be described with reference to the accompanying drawings.
Fig. 1 is a section of a joint between two concrete elements which are sealed in relation to each other by means of a sealing device according to the invention.
Fig. 1b is a section corresponding to Fig. 1a prior to the establishment of the joint by introducing a sealing element into a space between the concrete elements.
Fig. 2a is an axial section of a joint between a socket and a spigot end belonging to the end portions of two concrete pipes, the joint being provided with a sealing device according to the invention.
Fig. 2b is an axial section corresponding to Fig. 2a prior to the establishment of the joint by introducing the spigot end into the socket.
Fig. 3a is an axial section of a joint between a socket and a spigot end belonging to the end portions of two concrete pipes, the joint being provided with a sealing device according to the invention, the sealing device according to the invention comprising a sealing element which is moulded into the socket.
Fig. 3b is an axial section, corresponding to Fig. 3a prior to the establishment of the joint between the socket and the spigot end by axially introducing the spigot end into the socket.
Fig. 3c is a section of a sealing element in the form of sealing ring included in the sealing device according to Fig. 3a.
Fig. 4a is an axial section of a joint between a spigot end and a socket belonging to two concrete pipes, the joint including a sealing device according to the invention, the sealing device comprising a sealing element and an annular element connected with the sealing element, the sealing element as well as the annular element being moulded into the concrete pipe socket.
Fig. 4b is an axial section corresponding to Fig. 4a of the pipe socket prior to the pipe jointing.
Fig. 4c is a section of the sealing element and the annular element connected therewith included in the sealing device according to the invention.

Fig. 1a shows a section of a joint between two concrete elements 2 and 4, for example two concrete plates each having a sealing surface 6 and 8, respectively. The sealing surfaces 6 and 8 face each other and define together a space 10 between the sealing surfaces 6 and 8. In the space 10 there is provided a sealing element 12 which is compressed between the sealing surfaces 6 and 8 and is formed as a bead. The sealing bead 12 consists of elastic rubber material 12 and a reinforcing element 18 vulcanized into the elastic material, the reinforcing element consisting of plastic or any other material which is rigid in relation to the elastic rubber material 16. At its side surfaces engaging the sealing surfaces 6 and 8 the sealing bead 12 has layers of fibre flock 20 applied onto said side surfaces. The fibre flock 20 consists of textile fibres, for example synthetic fibres of polyamide, having a length for example 3 mm. The fibre flock 20 includes a relatively large number of fibres per square mm of the side surfaces of the sealing bead 12, for example 150 - 300 fibres per square mm.

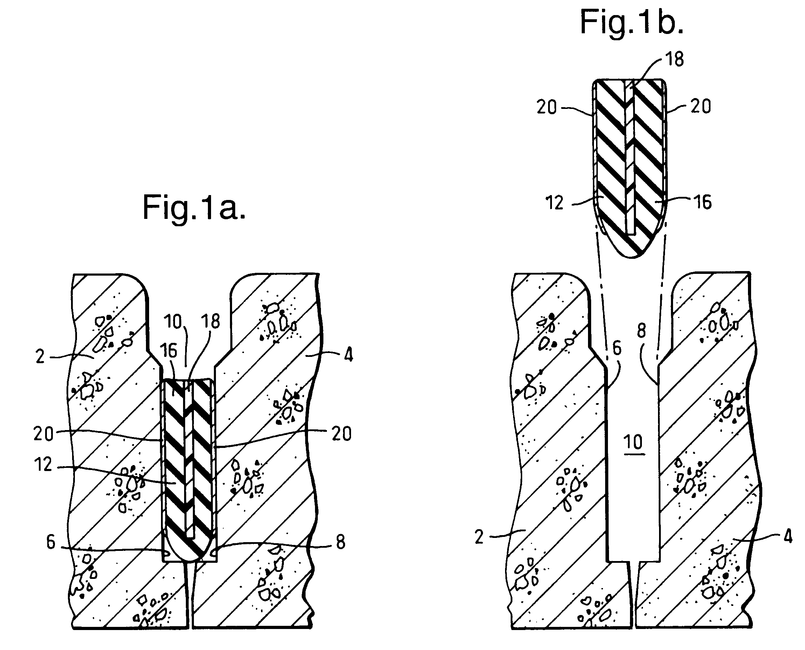

The fibre flock 20 has the object of providing a sliding agent or lubricant when providing the joint between the concrete elements 2 and 4 by introducing the sealing bead 12 into the space 10 between the sealing surfaces 6 and 8. As appears from Fig. 1b, the sealing bead 12 is forced into the space 12 from the upper end of the space 10, while the side surfaces of the sealing bead 12 slide against the sealing surfaces 6 and 8 of the space 10. When the sealing bead 12 is introduced into the space 10 the sealing bead is compressed, so that the side surfaces of the sealing bead 12 are in a sealing way forced against the sealing surfaces 6 and 8. Because of the existence of the fibre flock 12, the usual application of a lubricant onto the side surfaces of the sealing bead or onto the sealing surfaces 6 and 8 can be eliminated which is otherwise necessary for making it possible for the sealing bead 12 to slide against the sealing surfaces 6 and 8 in a correct way. When the sealing bead 12 is introduced into the space 10, the introduction is facilitated by the existence of the reinforcing element 18 which prevents that the sealing bead 12 is at the introduction compressed in the vertical direction.

The fibre flock 20 is bound to the side surfaces of the sealing bead 12 by means of an adhesive, for example a resin adhesive of two-component type. The application of the fibre flock is suitably conducted by means of a conventional technique according to which the sealing surfaces of the sealing bead are initially provided with an adhesive whereupon electrically charged fibres are supplied to the adhesive and thereby get stuck and bound.

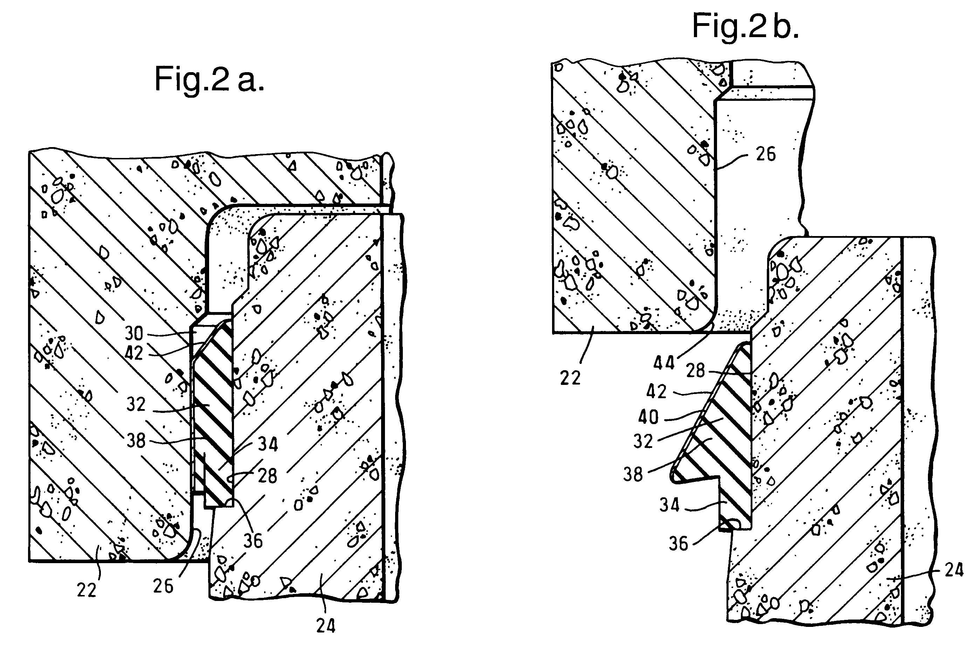

Fig. 2a shows an axial section of a joint between the end portions of two concrete pipes, said end portions forming a socket 22 and a spigot end 24. The socket 22 has an inner, substantially cylindrical sealing surface 26, and the spigot end has an outer, also substantially cylindrical sealing surface 28. The sealing surfaces 26 and 28 are substantially concentric with each other and define an annular space 30 in which a sealing ring 32 is compressed while being forced against the sealing surfaces 26 and 28. The sealing ring 32 has a support portion 34 resting on a shoulder 36 on the spigot end 24 and has further a sealing projection 38, which, as appears from Fig. 2, prior to the pipe jointing forms a substantially conical sliding surface 40. A layer 42 of fibre flock is applied to the sliding surface 40, the fibre flock being of the same kind as the fibre flock layer 20 of the embodiment according to Figs. 1a and 1b.

Prior to the establishment of the pipe joint shown in Fig. 2a the sealing ring 32 is tensioned onto the spigot end 24 into the position shown in Fig. 2b, whereupon the sealing surfaces 26 and 28 are introduced one into the other to the position shown in Fig. 2 by introducing the spigot end 24 into the socket 22 in the axial direction of the socket and the spigot end, i.e. in a direction substantially parallel with the sealing surfaces 26 and 28. During the jointing movement the inner corner 44 of the socket 22 will hit the conical sliding surface 40 of the sealing ring 32 for compressing the sealing projection 38 to the position shown in Fig. 2a while sliding against said conical sliding surface, the sealing ring 32 being in said position compressed between the sealing surfaces 26 and 28. The sliding against the conical surface 40 is made possible by the fact that the surface is provided with the layer 42 of fibre flock acting as a sliding agent or lubricant during the jointing movement. Because of the layer 42 of fibre flock there is not required the usual application of lubricant onto the sliding surface 40 of the sealing ring or the sealing surface 26 of the socket.

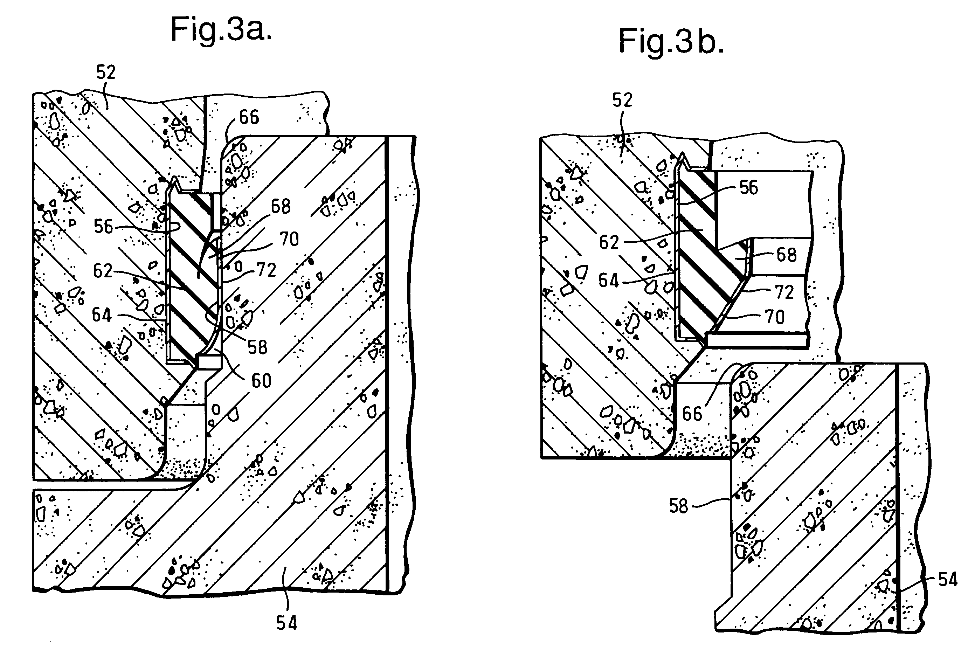

In Fig. 3a there is shown an axial section of a joint between a socket 52 and a spigot end 54 belonging to each of two pipe end portions consisting of concrete. The joint is sealed by means of a sealing device according to the invention comprising an inner, substantially cylindrical sealing surface 56 on the socket 52 and a substantially cylindrical sealing surface 58 on the spigot end 54 substantially concentric with the sealing surface of the socket. The sealing surfaces 56 and 58 define an annular space 60 between the socket and the spigot end, and in this space there is positioned a compressed sealing ring 62 engaging the sealing surfaces 56 and 58. The sealing ring 62 is connected with the sealing surface 56 of the socket by the fact that the sealing ring is partly moulded into the socket 52 at said surface thereof. The moulding of the sealing ring 62 into the socket has in a way known per se been provided in connection with the moulding of the concrete pipe which includes the socket 52. In order to improve the binding to the concrete and provide that the sealing ring 62 is retained in its moulded-in position also during the following pipe jointing, the surface portion of the sealing ring 62 which is moulded into the socket 52 is provided with a layer 64 of fibre flock applied to said surface portion. The fibre flock included in the layer 64 is bound to said surface portion of the sealing ring 62 by means of an adhesive. Suitably, the fibre flock consists of textile fibres, for example synthetic fibres of polyamide, and the fibres can have a length of between 0,5 and 5 mm. The number of fibres per area unit can for example amount to between 50 and 300 fibres per square mm. The layer 64 consisting of fibre flock provides for an efficient binding of the sealing ring 62 to the concrete without the use of special retainer portions or the like on the sealing ring 62. The omission of such retainer portions is advantageous with regard to the fact that the retainer portions decrease the strength of the concrete of the socket 52.

The joint between the socket 52 and the spigot end 54 is provided by the fact that the socket 52 and the spigot end 54 are, starting from the position shown in Fig. 3b, introduced one into the other in the axial direction, i.e. in a direction substantially parallel with the sealing surfaces 56 and 58. During the introduction movement the outer edge 66 of the spigot end will hit a radially inwardly directed sealing portion 68 of the sealing ring 62 while sliding against the conical surface 70 of the sealing portion 68. During the continuing jointing movement ending up in the position in which the socket 52 and the spigot end 54 take the position shown in Fig. 3a, the sliding surface 58 slides against the free inner surface of the sealing portion 68 of the sealing rings 62. In order to facilitate the sliding between the concrete material of the spigot end 54 and the sealing portion 68 of the sealing ring 62 the sealing portion of the sealing ring is at its inner surface provided with a layer 72 of a fibre flock applied to said surface. This fibre flock is suitably of the same kind as the fibre flock included in the layers 20 and 40 in the sealing device according to the invention described with reference to the above embodiments. The layer 72 of fibre flock provides that it is prior to the pipe jointing not necessary to apply a special lubricant onto the sealing surface 58 of the spigot end 54 or onto the sealing ring 62.

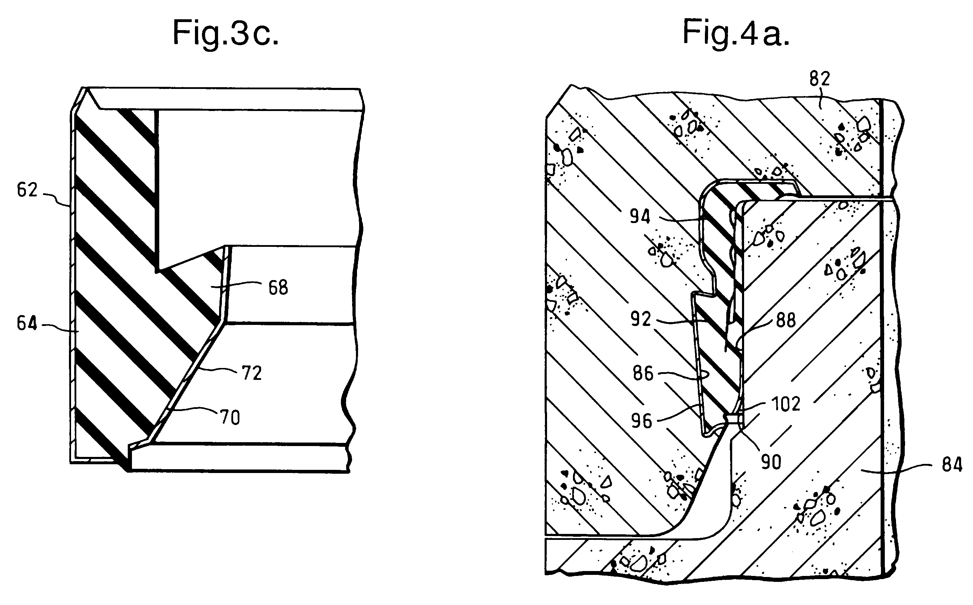

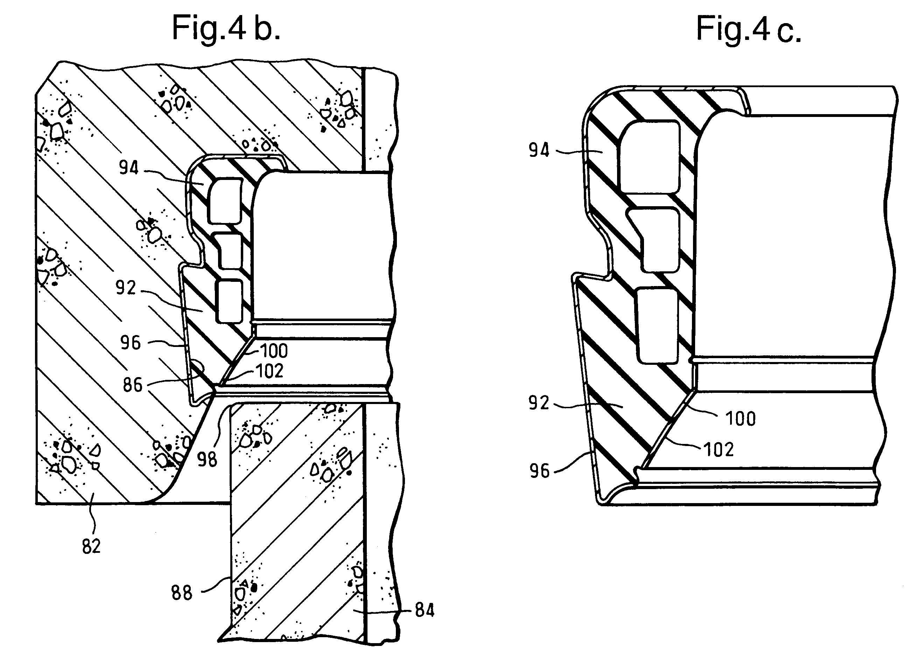

Also the embodiment of the sealing device according to the invention shown in Figs. 4a and 4b is included in a joint between a socket 82 and a spigot end 84 belonging to the end portions of two concrete pipes. The socket 82 has a sealing surface 86 and the spigot end 84 has a sealing surface 88, the sealing surfaces being of substantially cylindrical shape and being concentric with each other for forming an annular space 90 between the socket 82 and the spigot end 84. In the annular space 90 there is positioned a sealing ring 92 which is compressed between the sealing surfaces 86 and 88. The sealing ring 92 is formed in one piece with an annular element 94 which is positioned in the socket 82 axially inside the sealing ring 92. The annular unit consisting of the sealing ring 92 and the annular element 94 is moulded into the socket 82 at the inner surface thereof. When the unit consisting of the sealing ring 92 and the annular element 94 has been moulded into the socket, the annular element 94 forms a deformable portion axially inside the sealing ring 92 which makes it unnecessary to use at the moulding a mould portion which is positioned axially inside the sealing ring 92 and must subsequently be removed. The sealing ring 92 as well as the annular element 92 have at the portion moulded into the concrete material of the socket 82 a layer 96 of fibre flock so as to improve the binding to the concrete in the same way as according to the embodiments of Figs. 3a, 3b and 3c which makes it possible to exclude special retainer elements from the sealing ring 92 and the annular element 94.

When establishing the pipe joint there is provided an axial displacement of the socket 82 and the spigot end 84 from the position shown in Fig. 4b, a sliding action taking place between the outer edge portion 98 of the spigot end 84 and the sealing surface 88 of the spigot end 84 on one hand and the inwardly facing surface of the sealing ring 92 on the other hand. In order to facilitate the sliding movement the sealing ring 92 is at an inner, conical surface 100 provided with a layer 102 consisting of fibre flock of the same kind as the fibre flock of the embodiments of the sealing devices according to the invention described above. Subsequently to the jointing of the socket 82 and the spigot end 84 the sealing ring 92 takes a compressed, sealing position in the space between the sealing surfaces 86 and 88. The annular element 94 takes up the deformation of the sealing ring 92 and allows also a certain angular position between the spigot end 84 and the socket 82.

The layer 102 consisting of fibre flock makes it possible to exclude the application of a lubricant prior to the connection of the spigot end 84 and the socket 82.

The invention can be modified within the scope of the following claims.

## Claims

1. A sealing device for sealing a joint between two elements (2, 4; 22, 24; 52, 54; 82, 84), for example two pipe end portions, comprising a space (10; 30; 60; 90) defined by two sealing surfaces (6, 8; 26, 28; 56, 58; 86, 88) facing each other and positioned on said elements and a sealing element (12; 32; 62; 92) consisting of elastic material and compressed in the space between the sealing surfaces, the sealing element being introducable into the space while a sliding action takes place between one or several sliding surfaces of the sealing element on one hand and one of the sealing surfaces or the sealing surfaces on the other hand to the position in which the sealing element is compressed between the sealing surfaces in the space, **characterized** in that the sliding surface or the sliding surfaces of the sealing element and/or the sealing surface or the sealing surfaces adapted to cooperate with the sliding surface or the sliding surfaces are at least partially provided with fibre flock (20; 42; 72; 102) applied on said surfaces.

2. A sealing device as claimed in claim 1, **characterized** in that the fibre flock (20; 42; 72; 102) is bound to the surfaces by means of an adhesive, for example a resin adhesive of the two-component type.

3. A sealing device as claimed in claim 1 or 2, **characterized** in that the fibre flock (20; 42; 72; 102) consists of textile fibres, for example synthetic fibres of polyamide, which have a length of between 0,5 and 5 mm, preferably between 0,5 and 3 mm.

4. A sealing device as claimed in any of claims 1 - 3, **characterized** in that the fibre flock (20; 42; 72; 102) comprises 50 - 300, preferably 150 - 300, fibres per square mm.

5. A sealing device as claimed in any of the preceding claims, **characterized** in that the space (30; 60; 90) has been established by displacing the sealing surfaces (26, 28; 56, 58; 86, 88) in a direction which is parallel with the sealing surfaces and that the sealing element (32; 62; 92) has been introduced into the space prior to the displacement of the sealing surfaces by being positioned in firm engagement with one of the sealing surfaces and has during the displacement of the sealing surfaces thereupon slided against the other sealing surface (26; 58; 88) by means of one or more sliding surfaces provided with fibre flock.

6. A sealing device as claimed in claim 5, **characterized** in that the sealing element (62; 92) is moulded into the element which constitutes said one sealing surface.

7. A sealing device as claimed in claim 6, **characterized** in that the surface of the sealing element (62; 92) which is moulded into the element (52; 82) forming said one sealing surface is at least partially provided with fibre flock (64; 96) applied to the surface for improving the binding between the sealing element and the element into which the sealing element is moulded.

8. A sealing device as claimed in claim 6 or 7, **characterized** in that the two elements are constituted by two pipe end portions forming a socket (52; 82) and a spigot end (54; 84) introduced into the socket and that the sealing element is constituted by a sealing ring (62; 92) moulded into the socket at the inner surface thereof.

9. A sealing device as claimed in claim 8, **characterized** by an annular element (94) consisting of elastic material and connected with the sealing ring (92), the annular element being in relation to the free end of the socket (82) moulded into the socket axially inside the sealing ring and being adapted to taking up the sealing deformation of the sealing ring when the spigot end (84) is introduced into the socket.

10. A sealing device as claimed in claim 9, **characterized** in that the annular element (94) is at a sliding surface intended for sliding against the spigot end (84) introduced into the socket and/or at a surface engaging the material of the socket in its moulded-in position at least partially provided with fibre flock applied to said surfaces.
